# EUROPEAN PATENT APPLICATION

(11) **EP 4 509 353 A1**
(43) Date of publication of application: **19.02.2025**
(21) Application number: 23887150.3
(22) Date of filing: 21.12.2023
(51) Int. Cl.: B60L 53/80, B60S 5/06

(54) **BATTERY SWAPPING STATION CONTROL METHOD, APPARATUS AND SYSTEM, AND BATTERY SWAPPING STATION**

(30) Priority: 27.06.2023 CN 202310769657
(71) Applicant: Hunan Xingbida Netlink Technology Co., Ltd, Changsha, Hunan 410600 (CN)
(72) Inventor: WANG, Tiemin, Changsha, Hunan 410600 (CN); ZHANG, Ye, Changsha, Hunan 410600 (CN); FU, Yewei, Changsha, Hunan 410600 (CN)
(74) Representative: Canzler & Bergmeier Patentanwälte Partnerschaft mbB
(86) International application number: PCT/CN2023/140580
(87) International publication number: WO 2025/000976

(57) **Abstract**

The present invention relates to the field of battery swapping and provides a method, apparatus, and system for controlling a battery swapping station, and the battery swapping station. The method includes: in a case that a battery swapping trolley in the battery swapping station needs to move horizontally to a first target position along a battery swapping track, setting a relative position of the battery swapping trolley to the first target position; controlling a first servo motor in the battery swapping trolley to drive the battery swapping trolley to move along the battery swapping track based on the set relative position; in the process that the battery swapping trolley moves to the first target position, acquiring a moving distance based on an encoder of the first servo motor; in a case that the moving distance is inconsistent with a first actual distance acquired by a first distance measuring sensor, determining that position compensation is required for the battery swapping trolley; resetting the relative position based on the first actual distance and the moving distance to perform the position compensation for the battery swapping trolley; and continuously controlling the first servo motor to drive the battery swapping trolley to move along the battery swapping track based on the reset relative position. The present invention solves the problem that the battery swapping trolley cannot arrive at a target position as a result of slip, and the battery swapping trolley is positioned more accurately.

## Description

### TECHNICAL FIELD

The present invention relates to the technical field of battery swapping, and particularly relates to a method, apparatus, and system for controlling a battery swapping station, and a battery swapping station.

### BACKGROUND

Nowadays, electric vehicles have been widely used. As far as an electric vehicle such as a heavy truck is concerned, when a battery is swapped in a battery swapping station, it is needed to grab and hoist the battery on the electric vehicle through a power swapping trolley and move the battery to a battery compartment for storage, and then grab a fully charged battery and move it along a track to be mounted on the electric vehicle. In the process that the battery swapping trolley moves on the track, the battery swapping trolley may inevitably slip, resulting that the battery swapping trolley cannot arrive at a target position accurately, which therefore affects the battery swapping success rate.

### SUMMARY

The present invention provides a method, apparatus, and system for controlling a battery swapping station, and a battery swapping station, to overcome the deficiency in the prior art that a battery swapping trolley cannot arrive at a target position accurately due to slip, and the battery swapping trolley can be controlled to arrive at the target position accurately to be accurately positioned.

The present invention provides a method for controlling a battery swapping station, including:
in a case that a battery swapping trolley in the battery swapping station needs to move horizontally to a first target position along a battery swapping track, setting a relative position of the battery swapping trolley to the first target position, where the battery swapping trolley is configured to hoist a battery from a first base, to horizontally move above a second base, and to lower the battery to the second base;
controlling a first servo motor in the battery swapping trolley to drive the battery swapping trolley to move along the battery swapping track based on the set relative position;
in the process that the battery swapping trolley moves to the first target position, acquiring a moving distance based on an encoder of the first servo motor;
in a case that the moving distance is inconsistent with a first actual distance acquired by a first distance measuring sensor, determining that position compensation is required for the battery swapping trolley, where the first actual distance is an actual moving distance of the battery swapping trolley;
resetting the relative position based on the first actual distance and the moving distance to perform the position compensation for the battery swapping trolley; and
continuously controlling the first servo motor to drive the battery swapping trolley to move along the battery swapping track based on the reset relative position.

A method for controlling a battery swapping station provided by the present invention further includes:
measuring a distance to a first marker on the battery swapping track through the first distance measuring sensor arranged on the battery swapping trolley to obtain a first measured distance; and
acquiring the first actual distance based on a variation of the first measured distance.

According to the method for controlling a battery swapping station provided by the present invention, the step of resetting the relative position based on the first actual distance and the moving distance to perform the position compensation for the battery swapping trolley includes:
resetting the relative position based on a difference value between the moving distance and the first actual distance to perform the position compensation for the battery swapping trolley.

A method for controlling a battery swapping station provided by the present invention further includes:
in the process of lowering the battery to the second base by the battery swapping trolley through a lifting appliance, controlling a lowering speed of the battery by the battery swapping trolley based on a second actual distance measured by a second distance measuring sensor, where the second actual distance is an actual distance between the battery swapping trolley and the lifting appliance.

According to the method for controlling a battery swapping station provided by the present invention, the step of controlling a lowering speed of the battery by the battery swapping trolley based on a second actual distance measured by a second distance measuring sensor includes:
in a case that the battery swapping trolley starts to lower the battery through the lifting appliance, controlling the battery swapping trolley to lower the battery aiming at a reference lowering speed;
in a case that the second actual distance represents that the battery reaches a height of a first guide pillar of the second base, controlling the battery swapping trolley to lower the battery according to a first lowering speed, where the first lowering speed is a product of the second actual distance and a first preset coefficient;
in a case that the second actual distance represents that the battery reaches a height of a second guide pillar of the second base, controlling the battery swapping trolley to lower the battery according to a second lowering speed, where the second lowering speed is a product of the second actual distance and a second preset coefficient, and the height of the second guide pillar is less than the height of the first guide pillar; and
in a case that the second actual distance represents that the battery reaches a height of a connector of the second base, controlling the battery swapping trolley to lower the battery according to a third lowering speed, where the third lowering speed is determined based on a magnitude relationship between a fourth lowering speed and a preset minimum speed, the fourth lowering speed is a product of the second actual distance and a third preset coefficient, and the height of the connector is less than the height of the second guide pillar.

According to the method for controlling a battery swapping station provided by the present invention, the first base is a vehicle-mounted base of an electric vehicle and the method for controlling a battery swapping station further includes:
in a case that a latch hook on the first base for locking the battery is in an unlocked state and an output torque of a driving mechanism of the lifting appliance in the battery swapping trolley is greater than or equal to a hoisting torque of the battery and is less than a preset torque, controlling the driving mechanism to drive the lifting appliance to hoist the battery; and
in a case that the output torque of the driving mechanism is greater than or equal to the preset torque, controlling the driving mechanism to stop the output torque.

A method for controlling a battery swapping station provided by the present invention further includes:
restricted by a preset maximum drive current of the driving mechanism, controlling the output torque of the driving mechanism.

The present invention further provides an apparatus for controlling a battery swapping station, including:
a position setting module, configured to, in a case that a battery swapping trolley in the battery swapping station needs to move horizontally to a first target position along a battery swapping track, set a relative position of the battery swapping trolley to the first target position, where the battery swapping trolley is configured to hoist a battery from a first base, to horizontally move above a second base, and to lower the battery to the second base;
a motor control module, configured to control a first servo motor in the battery swapping trolley to drive the battery swapping trolley to move along the battery swapping track based on the set relative position;
a distance acquisition module, configured to, in the process that the battery swapping trolley moves to the first target position, acquire a moving distance based on an encoder of the first servo motor;
a compensation determination module, configured to, in a case that the moving distance is inconsistent with a first actual distance acquired by a first distance measuring sensor, determine that position compensation is required for the battery swapping trolley, where the first actual distance is an actual moving distance of the battery swapping trolley;
a position setting module, further configured to reset the relative position based on the first actual distance and the moving distance to perform the position compensation for the battery swapping trolley; and
a motor control module, further configured to continuously control the first servo motor to drive the battery swapping trolley to move along the battery swapping track based on the reset relative position.

The present invention further provides a system for controlling a battery swapping station, including:
a battery swapping trolley in the battery swapping station, configured to hoist a battery from a first base, to horizontally move above a second base, and to lower the battery to the second base; and
a controller, configured to, in a case that the battery swapping trolley needs to move horizontally to a first target position along a battery swapping track, set a relative position of the battery swapping trolley to the first target position; to control a first servo motor in the battery swapping trolley to drive the battery swapping trolley to move along the battery swapping track based on the set relative position; in the process that the battery swapping trolley moves to the first target position, to acquire a moving distance based on an encoder of the first servo motor; in a case that the moving distance is inconsistent with a first actual distance acquired by a first distance measuring sensor, to determine that position compensation is required for the battery swapping trolley, where the first actual distance is an actual moving distance of the battery swapping trolley; to reset the relative position based on the first actual distance and the moving distance to perform the position compensation for the battery swapping trolley; and to continuously control the first servo motor to drive the battery swapping trolley to move along the battery swapping track based on the reset relative position.

The present invention further provides a battery swapping station, including any one system for controlling a battery swapping station described above.

The present invention further provides an electronic device, including a memory, a processor, and a computer program that is stored in the memory and runnable in the processor, where when executing the program, the processor implements any one method for controlling a battery swapping station described above.

The present invention further provides a non-transient computer-readable storage medium, having a computer program stored therein. When executed by the processor, the computer program implements any one method for controlling a battery swapping station described above.

According to the method for controlling a battery swapping station provided by the present invention, in a case that the battery swapping trolley in the battery swapping station needs to move horizontally to a first target position along a battery swapping track, a relative position of the battery swapping trolley to the first target position is set; a first servo motor in the battery swapping trolley is controlled to drive the battery swapping trolley to move along the battery swapping track based on the set relative position; in a case that a moving distance acquired by an encoder of the first servo motor in the battery swapping trolley is inconsistent with an actual distance between the battery swapping trolley and the first target position measured by a first distance measuring sensor, the relative position may be reset based on the first actual distance and the moving distance to perform the position compensation for the battery swapping trolley, where the position compensation is configured to eliminate a deviation between the moving distance and the first actual distance. Thus, based on the reset relative position, the first servo motor is continuously controlled to drive the battery swapping trolley to move along the battery swapping track till arriving at the first target position, so that the positioning error of the battery swapping trolley is reduced. Therefore, the position of the battery grabbed by the lifting appliance of the battery swapping trolley is more accurate, the battery is more stable in hoisting and lowering processes, and the battery swapping success rate is improved.

### BRIEF DESCRIPTION OF DRAWINGS

In order to describe the technical solutions of the present invention or the prior art more clearly, drawings needed to be used in the embodiments or the prior art will be briefly described below. It is apparent that the drawings described below are some embodiments of the present invention, and those skilled in the technical field further can obtain other drawings according to the drawings without making creative efforts.
FIG. 1 is a schematic flowchart of a method for controlling a battery swapping station provided by the present invention;
FIG. 2 is a schematic diagram of a battery swapping process of the battery swapping station provided by the present invention;
FIG. 3 is a schematic structural diagram of an apparatus for controlling a battery swapping station provided by the present invention; and
FIG. 4 is a schematic structural diagram of an electronic device provided by the present invention.

### DETAILED DESCRIPTION OF EMBODIMENTS

In order to make the objectives, technical solutions and advantages of the present invention more clear, the technical solutions in the present invention will be clearly and completely described below in conjunction with the drawings in the present invention, and apparently, the described embodiments are some examples rather than all embodiments of the present invention. On the basis of the embodiments in the present invention, all other embodiments obtained by those of ordinary skill in the art without making creative efforts fall into the scope of protection of the present invention.

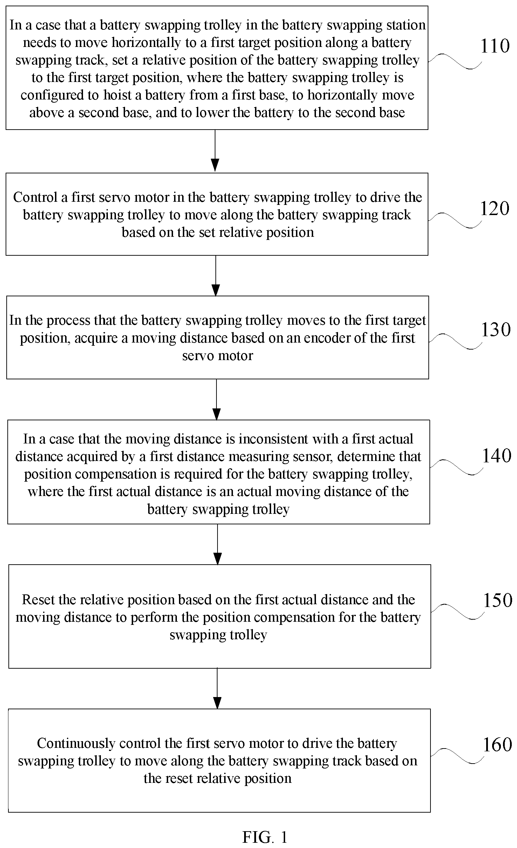

A method for controlling a battery swapping station provided by the present invention will be described below in combination with FIGs. 1-2.

The embodiment provides a method for controlling a battery swapping station, as shown in FIG. 1, at least including the following steps:
step 110: in a case that a battery swapping trolley in the battery swapping station needs to move horizontally to a first target position along a battery swapping track, setting a relative position of the battery swapping trolley to the first target position, where the battery swapping trolley is configured to hoist a battery from a first base, to horizontally move above a second base, and to lower the battery to the second base;
step 120: controlling a first servo motor in the battery swapping trolley to drive the battery swapping trolley to move along the battery swapping track based on the set relative position;
step 130: in the process that the battery swapping trolley moves to the first target position, acquiring a moving distance based on an encoder of the first servo motor;
step 140: in a case that the moving distance is inconsistent with a first actual distance acquired by a first distance measuring sensor, determining that position compensation is required for the battery swapping trolley, where the first actual distance is an actual moving distance of the battery swapping trolley;
step 150: resetting the relative position based on the first actual distance and the moving distance to perform the position compensation for the battery swapping trolley; and
step 160: continuously controlling the first servo motor to drive the battery swapping trolley to move along the battery swapping track based on the reset relative position.

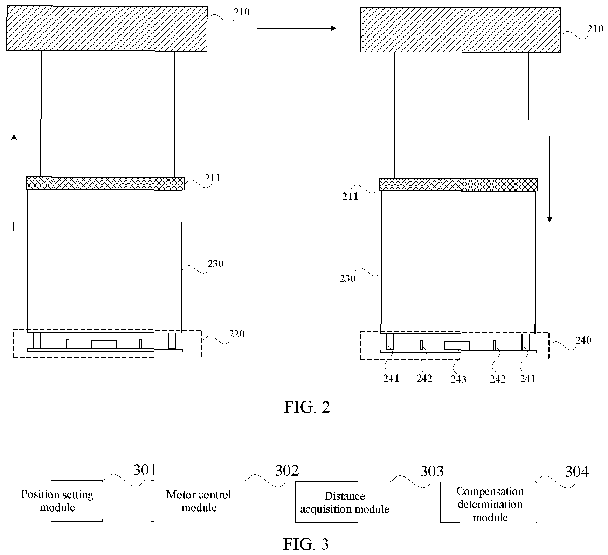

The battery swapping station provided in the embodiment is configured to swap the battery of the electric vehicle. The electric vehicle may be the heavy truck. Therefore, the battery swapping station may be a heavy truck battery swapping station. Exemplarily, the battery swapping station may include a support. A first battery swapping track in a first horizontal direction and a second battery swapping track in a second horizontal direction are arranged on the support. The first horizontal direction and the second horizontal direction are perpendicular to each other. Correspondingly, the battery swapping trolley may include two servo motors. The battery swapping trolley may be driven by the first servo motor corresponding to the first horizontal direction to move in the first battery swapping track and may be driven by the first servo motor corresponding to the second horizontal direction to move in the second battery swapping track. A lifting appliance connected through a rope is arranged below the battery swapping trolley. As shown in FIG. 2, a battery swapping trolley 210 may hoist a battery 230 on a first base 220 (shown by an upward arrow in the drawing) through a lifting appliance 211, and lower (shown by a downward arrow in the drawing) the battery on a second base 240 after horizontally moving (shown by a leftward arrow in the drawing) the battery through the first battery swapping track and the second battery swapping track above the second base 240. The first base may be a vehicle-mounted base of the electric vehicle, and therefore, the second base may be a base of the battery compartment of the battery swapping station. The first base may also be the base of the battery compartment of the battery swapping station, and therefore, the second base may be the vehicle-mounted base of the electric vehicle.

Specific structures of the battery swapping station and the battery swapping trolley may refer to related technologies, which are not described repeatedly herein.

The solution of the embodiment may be executed by a controller of the battery swapping trolley.

The battery swapping track in S 110 may be either the first battery swapping track, or the second battery swapping track.

The first target position is a position of the battery swapping trolley needed to arrive at the battery swapping track. In a battery swapping scenario, the electric vehicle may be positioned in a preset battery swapping area. The first target position of the battery swapping trolley may be acquired according to the preset battery swapping area. The battery swapping trolley in the embodiment is driven by a servo motor, and the servo motor may drive the battery swapping trolley to move according to a preset relative position (i.e., the relative distance) of the battery swapping trolley to the first target position. The servo motor includes an encoder, and a value of the encoder may represent the moving distance. However, in the process that the servo motor drives the battery swapping trolley to move along the battery swapping track, the battery swapping trolley slips inevitably, and particularly is easy to slip when using steel wheels, so that there is a great deviation between the moving distance represented by the value of the encoder of the servo motor and the actual moving distance of the battery swapping trolley on the battery swapping track, which will affect the battery swapping success rate.

An operating phase of the battery swapping trolley includes an acceleration phase, a uniform phase, and a deceleration phase. Slip mainly occurs when the battery swapping trolley moves in an accelerated or decelerated manner. In a case that the battery swapping trolley is in the acceleration phase, the battery swapping trolley may not perform position compensation. In a case that the battery swapping trolley enters the uniform phase from the acceleration phase, the battery swapping trolley may perform position compensation, so as to avoid that the battery swapping trolley exceeds the first target position as the speed deviation is great due to slip. In a case that the battery swapping trolley is in the deceleration phase, the battery swapping trolley may perform position compensation, so that the battery swapping trolley stops at the first target position accurately.

In the embodiment, in a case that the moving distance is inconsistent with the actual distance between the battery swapping trolley measured by the first distance measuring sensor and the first target position, the relative position may be reset based on the first actual distance and the moving distance to perform the position compensation for the battery swapping trolley, where the position compensation is configured to eliminate a deviation between the moving distance and the first actual distance. Thus, based on the reset relative position, the first servo motor is continuously controlled to drive the battery swapping trolley to move along the battery swapping track till arriving at the first target position, so that the positioning error of the battery swapping trolley is reduced. Therefore, the position of the battery grabbed by the lifting appliance of the battery swapping trolley is more accurate, the battery is more stable in hoisting and lowering processes, and the battery swapping success rate is improved.

In the embodiment, a positioning precision of the battery swapping trolley may reach ±5mm.

In an exemplary embodiment, the method for controlling a battery swapping station provided by the embodiment may further include: a distance to a first marker on the battery swapping track is measured through the first distance measuring sensor arranged on the battery swapping trolley to obtain a first measured distance; and the first actual distance is acquired based on a variation of the first measured distance.

In an actual application, the first marker may be arranged fixedly on the battery swapping track, the first distance measuring sensor may be arranged on the battery swapping trolley, and the first distance measuring sensor is configured to measure a distance to the first marker as the first measured distance. When the battery swapping trolley moves, the first measured distance measured by the first distance measuring sensor will also change, and after the relative position is set, the variation of the first measured distance may represent the first actual distance before and after the battery swapping trolley moves. For example, before the battery swapping trolley moves, the first measured distance obtained by the first distance measuring sensor is 1000 mm. After the battery swapping trolley moves, the first measured distance obtained by the first distance measuring sensor is 600 mm. The variation of the first measured distance is 400 mm, indicating that the battery swapping trolley actually moves by 400 mm.

Particularly, the first distance measuring sensor may be a laser distance measuring sensor, so that the first marker may be a reflector. Of course, it may also be another distance measuring sensor, for example, a radar distance measuring sensor, and the like.

In the embodiment, the distance to the first marker on the battery swapping track is measured through the first distance measuring sensor arranged on the battery swapping trolley, so that the actual moving distance of the battery swapping trolley may be obtained accurately, and therefore, it is convenient to determine accurately whether position compensation is needed in combination with the moving distance obtained by the encoder of the servo motor.

In an exemplary embodiment, the step of resetting the relative position based on a difference value between the moving distance and the first actual distance to perform the position compensation for the battery swapping trolley may specifically include: the relative position is reset based on the difference value between the moving distance and the first actual distance to perform position compensation for the battery swapping trolley.

Exemplarily, the difference value between the moving distance and the first actual distance is set as the relative position to perform position compensation of the battery swapping trolley.

Still for example, the relative position between the first target position and the battery swapping trolley is a position 450 mm away. In a case that the battery swapping trolley actually moves by 400 mm due to slip, and is 50 mm short to arrive at the first target position, position compensation may be performed on the 50 mm. The relative position is reset as 50 mm. The encoder of the first servo motor may encode according to the reset relative position, so as to drive the battery swapping trolley to arrive at the first target position.

In the embodiment, the step of resetting the relative position based on the difference value between the moving distance and the first actual distance to perform position compensation on the battery swapping trolley may accurately eliminate the deviation between the moving distance and the first actual distance, and the battery swapping trolley is positioned more accurately.

In an exemplary embodiment, the method for controlling a battery swapping station may further include: in the process of lowering the battery to the second base by the battery swapping trolley through a lifting appliance, controlling a lowering speed of the battery by the battery swapping trolley based on a second actual distance measured by a second distance measuring sensor, where the second actual distance is an actual distance between the battery swapping trolley and the lifting appliance.

In an actual application, a second marker may be arranged fixedly on a side of the lifting appliance close to the battery swapping trolley, the second distance measuring sensor may be arranged on the battery swapping trolley, and the second distance measuring sensor is configured to measure a distance to the second marker as the second measured distance. In a process that the battery swapping trolley lowers the battery through the lifting appliance to the second base, the second measured distance measured by the second distance measuring sensor will also change. The second measured distance may represent a lowering distance of the battery. The greater the second measured distance is, the less the distance between the battery and the second base is, that is to say, the battery is closer to the second base. When the battery is mounted on the second base, the position where the second marker arrives at is the second target position. In an implementation, targeted at the second target position, the battery swapping trolley is controlled to lower the battery through the lifting appliance to the second base.

Particularly, the second distance measuring sensor may be a laser distance measuring sensor, and the second marker may be a reflector. Of course, it may also be another distance measuring sensor, for example, a radar distance measuring sensor, and the like.

In the related art, the battery swapping trolley switches the speed between a high gear and a low gear directly when lowering the battery through the lifting appliance, resulting in unsmooth speed switch. The sudden change of speed leads to uncontrollable lowering speed and nonuniform deceleration of the battery. In the embodiment, the lowering speed of the battery by the battery swapping trolley is controlled based on the second actual distance measured by the second distance measuring sensor, so that the lowering speed and the lowering distance of the battery are associated to solve the problem that the lowering speed of the lifting appliance lowering the battery is uncontrollable. Therefore, the lowering speed of the battery is stable and controllable, so that the lowering speed is switched smoothly. On the premise of guaranteeing the battery swapping action time, an effect of smoothly taking and placing the battery is achieved.

In an exemplary embodiment, the step of controlling a lowering speed of the battery by the battery swapping trolley based on a second actual distance measured by a second distance measuring sensor specifically includes:
in a case that the battery swapping trolley starts to lower the battery through the lifting appliance, the battery swapping trolley is controlled to lower the battery aiming at a reference lowering speed;
in a case that the second actual distance represents that the battery reaches a height of a first guide pillar of the second base, the battery swapping trolley is controlled to lower the battery according to a first lowering speed, where the first lowering speed is a product of the second actual distance and a first preset coefficient;
in a case that the second actual distance represents that the battery reaches a height of a second guide pillar of the second base, the battery swapping trolley is controlled to lower the battery according to a second lowering speed, where the second lowering speed is a product of the second actual distance and a second preset coefficient, and the height of the second guide pillar is less than the height of the first guide pillar; and
in a case that the second actual distance represents that the battery reaches a height of a connector of the second base, the battery swapping trolley is controlled to lower the battery according to a third lowering speed, where the third lowering speed is determined based on a magnitude relationship between a fourth lowering speed and a preset minimum speed, the fourth lowering speed is a product of the second actual distance and a third preset coefficient, and the height of the connector is less than the height of the second guide pillar.

As shown in FIG. 2, the second base includes a first guide pillar 241, a second guide pillar 242, and a connector 243 decreasing in height in sequence. The first guide pillar 241 and the second guide pillar 242 are configured to guide and position the battery. The connector 243 may be connected to a cathode and an anode of the battery. The first base and the second base are same in structure.

The battery swapping trolley may drive the lifting appliance through a driving mechanism, for example, the second servo motor. When the battery is lowered to be in contact with the second base, the battery is in contact with the first pillar 241, the second guide pillar 242, and the connector 243 in sequence, at different lowering speeds correspondingly and respectively. The lowering speed is the speed at which the battery is lowered. A reference lowering speed is the maximum lowering speed when the battery is lowered at a uniform speed. When it is started to lower the battery, the reference lowering speed is achieved first, and then the speed is subsequently decreased to the first lowering speed, the second lowering speed, and the third lowering speed in sequence.

The first preset coefficient, the second preset coefficient, and the third preset coefficient may be acquired in advance through tests.

The reference lowering speed and the preset minimum speed may also be set according to an actual situation. Exemplarily, the preset minimum speed is 10 mm/s. The reference lowering speed is higher than the first lowering speed, the second lowering speed, the third lowering speed, and the fourth lowering speed. When the fourth lowering speed is lower than the preset minimum speed, the third lowering speed is the preset minimum speed. When the fourth lowering speed is higher than or equal to the preset minimum speed, the third lowering speed is the fourth lowering speed. Therefore, by limiting the lowering speed through the preset minimum speed, the duration of lowering the battery may be shortened, and the problem of stall of the second servo motor due to the too low lowering speed is also avoided.

The solution in the embodiment may solve the problem of collision and damage of the connector due to the too high battery lowering speed through closed-loop feedback control of the second actual distance. In the process that the battery is lowered to the vehicle-mounted base, the battery smoothly enters the first guide pillar, the second guide pillar, and the connector at different lowering speeds, so that a condition that the battery collides with the first guide pillar and the second guide pillar severely when approaching the vehicle-mounted base is avoided, and a condition that the electric vehicle cannot drive because the connector is damaged due to the too high lowering speed is also avoided.

In an exemplary embodiment, the first base is a vehicle-mounted base of an electric vehicle and the method for controlling a battery swapping station further includes:
in a case that a latch hook on the first base for locking the battery is in an unlocked state and an output torque of a driving mechanism of the lifting appliance in the battery swapping trolley is greater than or equal to a hoisting torque of the battery and is less than a preset torque, the driving mechanism is controlled to drive the lifting appliance to hoist the battery; and
in a case that the output torque of the driving mechanism is greater than or equal to the preset torque, the driving mechanism is controlled to stop the output torque.

The preset torque is greater than the hoisting torque of the battery, and for example, it may be 1.5 times the hoisting torque of the battery. In an actual application, vehicle state may be monitored through a control terminal of the battery swapping station. The vehicle state includes a locking state of a latch hook. In a case that the locking state is the unlocked state, the battery may be hoisted. To prevent the electric vehicle from being hoisted in the process of hoisting the battery, in a case that the output torque of the driving mechanism of the lifting appliance is greater than or equal to the hoisting torque of the battery but less than the preset torque, the driving mechanism is controlled to drive the lifting appliance to hoist the battery. The output torque of the battery swapping trolley is greater than or equal to the preset torque, and the driving mechanism is controlled to stop the output torque, specifically, the second servo motor is controlled to stop the output torque. Therefore, the battery swapping risk may be reduced, the battery swapping equipment is protected, and the battery swapping safety is ensured.

In an exemplary embodiment, the method for controlling a battery swapping station may further include: restricted by a preset maximum drive current of the driving mechanism, controlling the output torque of the driving mechanism.

Driving current of the driving mechanism of the lifting appliance may be the drive current of the second servo motor. In an implementation, the drive current of the driving mechanism may be restricted, so that the output torque may be restricted. Therefore, the risk that the electric vehicle is hoisted may be reduced, so that the battery swapping safety is further ensured.

The apparatus for controlling a battery swapping station provided by the present invention will be described below, and the apparatus for controlling a battery swapping station described below and the method for controlling a battery swapping station described above may be referred to each other correspondingly.

The embodiment provides an apparatus for controlling a battery swapping station, as shown in FIG. 3, including:
a position setting module 301, configured to, in a case that a battery swapping trolley in the battery swapping station needs to move horizontally to a first target position along a battery swapping track, set a relative position of the battery swapping trolley to the first target position, where the battery swapping trolley is configured to hoist a battery from a first base, to horizontally move above a second base, and to lower the battery to the second base;
a motor control module 302, configured to control a first servo motor in the battery swapping trolley to drive the battery swapping trolley to move along the battery swapping track based on the set relative position;
a distance acquisition module 303, configured to, in the process that the battery swapping trolley moves to the first target position, acquire a moving distance based on an encoder of the first servo motor;
a compensation determination module 304, configured to, in a case that the moving distance is inconsistent with a first actual distance acquired by a first distance measuring sensor, determine that position compensation is required for the battery swapping trolley, where the first actual distance is an actual moving distance of the battery swapping trolley;
a position setting module 301, further configured to reset the relative position based on the first actual distance and the moving distance to perform the position compensation for the battery swapping trolley; and
a motor control module 302, further configured to continuously control the first servo motor to drive the battery swapping trolley to move along the battery swapping track based on the reset relative position.

In an exemplary embodiment, the distance acquisition module is further configured to measure a distance to a first marker on the battery swapping track through the first distance measuring sensor arranged on the battery swapping trolley to obtain a first measured distance; and to acquire the first actual distance based on a variation of the first measured distance.

In an exemplary embodiment, the position setting module 301 is specifically configured to:
reset the relative position based on a difference value between the moving distance and the first actual distance to perform the position compensation for the battery swapping trolley.

In an exemplary embodiment, the apparatus for controlling a battery swapping station further includes:
a lifting appliance control module, configured to, in the process of lowering the battery to the second base by the battery swapping trolley through a lifting appliance, control a lowering speed of the battery by the battery swapping trolley based on a second actual distance measured by a second distance measuring sensor, where the second actual distance is an actual distance between the battery swapping trolley and the lifting appliance.

In an exemplary embodiment, the lifting appliance control module is specifically configured to:
in a case that the battery swapping trolley starts to lower the battery through the lifting appliance, control the battery swapping trolley to lower the battery aiming at a reference lowering speed;
in a case that the second actual distance represents that the battery reaches a height of a first guide pillar of the second base, control the battery swapping trolley to lower the battery according to a first lowering speed, where the first lowering speed is a product of the second actual distance and a first preset coefficient;
in a case that the second actual distance represents that the battery reaches a height of a second guide pillar of the second base, control the battery swapping trolley to lower the battery according to a second lowering speed, where the second lowering speed is a product of the second actual distance and a second preset coefficient, and the height of the second guide pillar is less than the height of the first guide pillar; and
in a case that the second actual distance represents that the battery reaches a height of a connector of the second base, control the battery swapping trolley to lower the battery according to a third lowering speed, where the third lowering speed is determined based on a magnitude relationship between a fourth lowering speed and a preset minimum speed, the fourth lowering speed is a product of the second actual distance and a third preset coefficient, and the height of the connector is less than the height of the second guide pillar.

In an exemplary embodiment, the lifting appliance control module is further configured to, in a case that a latch hook on the first base for locking the battery is in an unlocked state and an output torque of a driving mechanism of the lifting appliance in the battery swapping trolley is greater than or equal to a hoisting torque of the battery and is less than a preset torque, control the driving mechanism to drive the lifting appliance to hoist the battery; and
in a case that the output torque of the driving mechanism is greater than or equal to the preset torque, control the driving mechanism to stop the output torque.

In an exemplary embodiment, the lifting appliance control module is further configured to, restricted by a preset maximum drive current of the driving mechanism, control the output torque of the driving mechanism.

The system for controlling a battery swapping station provided by the present invention will be described below, and the system for controlling a battery swapping station described below and the method for controlling a battery swapping station described above may be referred to each other correspondingly.

The embodiment further provides a system for controlling a battery swapping station, including:
a battery swapping trolley in the battery swapping station, configured to hoist a battery from a first base, to horizontally move above a second base, and to lower the battery to the second base; and
a controller, configured to, in a case that the battery swapping trolley needs to move horizontally to a first target position along a battery swapping track, set a relative position of the battery swapping trolley to the first target position; to control a first servo motor in the battery swapping trolley to drive the battery swapping trolley to move along the battery swapping track based on the set relative position; in the process that the battery swapping trolley moves to the first target position, to acquire a moving distance based on an encoder of the first servo motor; in a case that the moving distance is inconsistent with a first actual distance acquired by a first distance measuring sensor, to determine that position compensation is required for the battery swapping trolley, where the first actual distance is an actual moving distance of the battery swapping trolley; to reset the relative position based on the first actual distance and the moving distance to perform the position compensation for the battery swapping trolley; and to continuously control the first servo motor to drive the battery swapping trolley to move along the battery swapping track based on the reset relative position.

Particularly, a first marker is arranged fixedly on the battery swapping track, the first distance measuring sensor is arranged on the battery swapping trolley, and the first distance measuring sensor is configured to measure a distance to the first marker to obtain the first measured distance, so as to acquire the first actual distance based on the variation of the first measured distance.

A specific implementation of the controller may be referred to the embodiment of the method for controlling a battery swapping station, which is not described repeatedly herein.

In an exemplary embodiment, the battery swapping trolley may further include a second servo motor, configured to drive the lifting appliance.

In an exemplary embodiment, a second marker is arranged fixedly on a side of the lifting appliance close to the battery swapping track. The battery swapping trolley may further include a second distance measuring sensor, configured to measure a distance to the second marker.

The embodiment further provides a battery swapping station, including the system for controlling a battery swapping station provided by any embodiment described above.

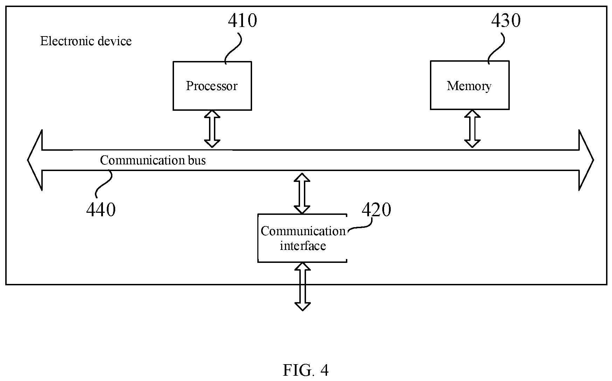

FIG. 4 illustrates a schematic diagram of a physical structure of an electronic device. As shown in FIG. 4, the electronic device may include a processor 410, a communication interface 420, a memory 430, and a communication bus 440, where the processor 410, the communication interface 420, and the memory 430 are in complete communication with one another via the communication bus 440. The processor 410 may call logic instructions in the memory 430 to execute the method for controlling a battery swapping station. The method includes:
in a case that a battery swapping trolley in the battery swapping station needs to move horizontally to a first target position along a battery swapping track, a relative position of the battery swapping trolley to the first target position is set, where the battery swapping trolley is configured to hoist a battery from a first base, to horizontally move above a second base, and to lower the battery to the second base;
a first servo motor in the battery swapping trolley is controlled to drive the battery swapping trolley to move along the battery swapping track based on the set relative position;
in the process that the battery swapping trolley moves to the first target position, a moving distance is acquired based on an encoder of the first servo motor;
in a case that the moving distance is inconsistent with a first actual distance acquired by a first distance measuring sensor, it is determined that position compensation is required for the battery swapping trolley, where the first actual distance is an actual moving distance of the battery swapping trolley;
the relative position is reset based on the first actual distance and the moving distance to perform the position compensation for the battery swapping trolley; and
the first servo motor is continuously controlled to drive the battery swapping trolley to move along the battery swapping track based on the reset relative position.

In addition, the logic instructions in the memory 430 may be implemented in the form of software functional units and sold or used as independent products, and may be stored in a computer readable storage medium. On the basis of such understanding, the technical solution of the present invention, in essence or from the view of part contributing to the prior art, or part of the technical solution may be embodied in the form of a computer software product that is stored in a storage medium and includes a plurality of instructions configured to allow one computer device (which may be a personal computer, a server or a network device, etc.) to conduct all or part of the steps of the method in each of the embodiments of the present invention. The foregoing storage medium includes a USB flash drive, a read-only memory (ROM), a random access memory (RAM), a diskette or an optical disk, etc., which may store program codes.

In another aspect, the present invention further provides a computer program product, including a computer program stored in a non-transient computer-readable storage medium. The computer program includes a program instruction. When the program instruction is executed by the computer, the computer is capable to execute the method for controlling a battery swapping station provided by the above methods. The method includes:
in a case that a battery swapping trolley in the battery swapping station needs to move horizontally to a first target position along a battery swapping track, a relative position of the battery swapping trolley to the first target position is set, where the battery swapping trolley is configured to hoist a battery from a first base, to horizontally move above a second base, and to lower the battery to the second base;
a first servo motor in the battery swapping trolley is controlled to drive the battery swapping trolley to move along the battery swapping track based on the set relative position;
in the process that the battery swapping trolley moves to the first target position, a moving distance is acquired based on an encoder of the first servo motor;
in a case that the moving distance is inconsistent with a first actual distance acquired by a first distance measuring sensor, it is determined that position compensation is required for the battery swapping trolley, where the first actual distance is an actual moving distance of the battery swapping trolley;
the relative position is reset based on the first actual distance and the moving distance to perform the position compensation for the battery swapping trolley; and
the first servo motor is continuously controlled to drive the battery swapping trolley to move along the battery swapping track based on the reset relative position.

In yet another aspect, the present invention further provides a non-transient computer readable storage medium, having a computer program stored therein. When executed by the processor, the computer program implements the method for controlling a battery swapping station provided above. The method includes:
in a case that a battery swapping trolley in the battery swapping station needs to move horizontally to a first target position along a battery swapping track, a relative position of the battery swapping trolley to the first target position is set, where the battery swapping trolley is configured to hoist a battery from a first base, to horizontally move above a second base, and to lower the battery to the second base;
a first servo motor in the battery swapping trolley is controlled to drive the battery swapping trolley to move along the battery swapping track based on the set relative position;
in the process that the battery swapping trolley moves to the first target position, a moving distance is acquired based on an encoder of the first servo motor;
in a case that the moving distance is inconsistent with a first actual distance acquired by a first distance measuring sensor, it is determined that position compensation is required for the battery swapping trolley, where the first actual distance is an actual moving distance of the battery swapping trolley;
the relative position is reset based on the first actual distance and the moving distance to perform the position compensation for the battery swapping trolley; and
the first servo motor is continuously controlled to drive the battery swapping trolley to move along the battery swapping track based on the reset relative position.

The apparatus embodiments described above are merely schematic, where units described as separate components may or may not be physically separated, and a component displayed as a unit may or may not be a physical unit, that is, the component may be located at one place, or distributed on a plurality of network units. Part or all of the modules may be selected according to actual requirements to achieve the objective of the solution of the embodiments. Those of ordinary skill in the art may understand and implement the present invention without making the inventive effort.

From the description of the above-mentioned embodiments, it may be apparent to those skilled in the art that each implementation may be achieved by means of software plus a general-purpose hardware platform, and certainly may also be achieved by means of hardware. On the basis of the understanding, the technical solution mentioned above may be embodied in a form of a software product in essence or a part contributing to the prior art, and the computer software product can be stored in a computer readable storage medium (for example, a ROM/RAM, a diskette, an optical disk, etc.), and includes a plurality of instructions for enabling a computer device (like a personal computer, a server or a network device, etc.) to execute the method described in various embodiments or some parts of the embodiments.

Finally, it is to be noted that the above embodiments are merely used for explaining the technical solution of the present invention rather than limiting the present invention. Despite reference to the aforementioned embodiments to make a detailed description for the present invention, it will be understood by those skilled in the art that they still can modify the technical scheme recorded by the aforementioned embodiments or make equivalent substitutions on part of technical features therein. Such modifications or substitutions do not deviate the nature of the technical solution from the spirit and scope of the technical solution embodied in the embodiments according to the present invention.

## Claims

1. A method for controlling a battery swapping station, comprising:
in a case that a battery swapping trolley in the battery swapping station needs to move horizontally to a first target position along a battery swapping track, setting a relative position of the battery swapping trolley to the first target position, wherein the battery swapping trolley is configured to hoist a battery from a first base, to horizontally move above a second base, and to lower the battery to the second base;
controlling a first servo motor in the battery swapping trolley to drive the battery swapping trolley to move along the battery swapping track based on the set relative position;
in the process that the battery swapping trolley moves to the first target position, acquiring a moving distance based on an encoder of the first servo motor;
in a case that the moving distance is inconsistent with a first actual distance acquired by a first distance measuring sensor, determining that position compensation is required for the battery swapping trolley, wherein the first actual distance is an actual moving distance of the battery swapping trolley;
resetting the relative position based on the first actual distance and the moving distance to perform the position compensation for the battery swapping trolley; and
continuously controlling the first servo motor to drive the battery swapping trolley to move along the battery swapping track based on the reset relative position.

2. The method for controlling a battery swapping station according to claim 1, further comprising:
measuring a distance to a first marker on the battery swapping track through the first distance measuring sensor arranged on the battery swapping trolley to obtain a first measured distance; and
acquiring the first actual distance based on a variation of the first measured distance.

3. The method for controlling a battery swapping station according to claim 2, wherein the step of resetting the relative position based on the first actual distance and the moving distance to perform the position compensation for the battery swapping trolley comprises:
resetting the relative position based on a difference value between the moving distance and the first actual distance to perform the position compensation for the battery swapping trolley.

4. The method for controlling a battery swapping station according to any one of claims 1 to 3, further comprising:
in the process of lowering the battery to the second base by the battery swapping trolley through a lifting appliance, controlling a lowering speed of the battery by the battery swapping trolley based on a second actual distance measured by a second distance measuring sensor, wherein the second actual distance is an actual distance between the battery swapping trolley and the lifting appliance.

5. The method for controlling a battery swapping station according to claim 4, wherein the step of controlling a lowering speed of the battery by the battery swapping trolley based on a second actual distance measured by a second distance measuring sensor comprises:
in a case that the battery swapping trolley starts to lower the battery through the lifting appliance, controlling the battery swapping trolley to lower the battery aiming at a reference lowering speed;
in a case that the second actual distance represents that the battery reaches a height of a first guide pillar of the second base, controlling the battery swapping trolley to lower the battery according to a first lowering speed, wherein the first lowering speed is a product of the second actual distance and a first preset coefficient;
in a case that the second actual distance represents that the battery reaches a height of a second guide pillar of the second base, controlling the battery swapping trolley to lower the battery according to a second lowering speed, wherein the second lowering speed is a product of the second actual distance and a second preset coefficient, and the height of the second guide pillar is less than the height of the first guide pillar; and
in a case that the second actual distance represents that the battery reaches a height of a connector of the second base, controlling the battery swapping trolley to lower the battery according to a third lowering speed, wherein the third lowering speed is determined based on a magnitude relationship between a fourth lowering speed and a preset minimum speed, the fourth lowering speed is a product of the second actual distance and a third preset coefficient, and the height of the connector is less than the height of the second guide pillar.

6. The method for controlling a battery swapping station according to any one of claims 1 to 3, wherein the first base is a vehicle-mounted base of an electric vehicle, and the method for controlling a battery swapping station further comprises:
in a case that a latch hook on the first base for locking the battery is in an unlocked state and an output torque of a driving mechanism of the lifting appliance in the battery swapping trolley is greater than or equal to a hoisting torque of the battery and is less than a preset torque, controlling the driving mechanism to drive the lifting appliance to hoist the battery; and
in a case that the output torque of the driving mechanism is greater than or equal to the preset torque, controlling the driving mechanism to stop the output torque.

7. The method for controlling a battery swapping station according to claim 6, further comprising:
restricted by a preset maximum drive current of the driving mechanism, controlling the output torque of the driving mechanism.

8. An apparatus for controlling a battery swapping station, comprising:
a position setting module, configured to, in a case that a battery swapping trolley in the battery swapping station needs to move horizontally to a first target position along a battery swapping track, set a relative position of the battery swapping trolley to the first target position, wherein the battery swapping trolley is configured to hoist a battery from a first base, to horizontally move above a second base, and to lower the battery to the second base;
a motor control module, configured to control a first servo motor in the battery swapping trolley to drive the battery swapping trolley to move along the battery swapping track based on the set relative position;
a distance acquisition module, configured to, in the process that the battery swapping trolley moves to the first target position, acquire a moving distance based on an encoder of the first servo motor;
a compensation determination module, configured to, in a case that the moving distance is inconsistent with a first actual distance acquired by a first distance measuring sensor, determine that position compensation is required for the battery swapping trolley, wherein the first actual distance is an actual moving distance of the battery swapping trolley;
a position setting module, further configured to reset the relative position based on the first actual distance and the moving distance to perform the position compensation for the battery swapping trolley; and
a motor control module, further configured to continuously control the first servo motor to drive the battery swapping trolley to move along the battery swapping track based on the reset relative position.

9. A system for controlling a battery swapping station, comprising:
a battery swapping trolley in the battery swapping station, configured to hoist a battery from a first base, to horizontally move above a second base, and to lower the battery to the second base; and
a controller, configured to, in a case that the battery swapping trolley needs to move horizontally to a first target position along a battery swapping track, set a relative position of the battery swapping trolley to the first target position; to control a first servo motor in the battery swapping trolley to drive the battery swapping trolley to move along the battery swapping track based on the set relative position; in the process that the battery swapping trolley moves to the first target position, to acquire a moving distance based on an encoder of the first servo motor; in a case that the moving distance is inconsistent with a first actual distance acquired by a first distance measuring sensor, to determine that position compensation is required for the battery swapping trolley, wherein the first actual distance is an actual moving distance of the battery swapping trolley; to reset the relative position based on the first actual distance and the moving distance to perform the position compensation for the battery swapping trolley; and to continuously control the first servo motor to drive the battery swapping trolley to move along the battery swapping track based on the reset relative position.

10. A battery swapping station, comprising the system for controlling a battery swapping station according to claim 9.
